# EUROPEAN PATENT APPLICATION

(11) **EP 1 703 679 A1**
(43) Date of publication of application: **20.09.2006**
(21) Application number: 05290588.2
(22) Date of filing: 16.03.2005
(51) Int. Cl.: H04L 12/56

(54) **Mobile terminal and access point**

(71) Applicant: ALCATEL, 75008 Paris (FR)
(72) Inventor: Hofmann, Dirk, Dr., 74321 Bietigheim-Bissingen (DE)
(74) Representative: Richardt, Markus Albert

(57) **Abstract**

The invention relates to a method for establishing a synchronisation or for establishing a connection between a mobile terminal 1 and a base station 2 and/or an access point 3 in a wireless communication system 4, whereby the mobile terminal carries out the following steps:
a) measuring the location 5 of the mobile terminal,
b) identifying a base station and/or an access point by comparing said location with data stored in the mobile terminal, said data comprising information on
b1) the positions 6, 7 of the base stations and/or access points, and
b2) parameters associated with these base stations and/or access points, the parameters being usable by a mobile terminal for establishing a synchronisation (for receiving broadcast information and for measuring) or for establishing a connection to at least on of these base stations and/or access points,

c) establishing a synchronisation or establishing a connection to the identified base station and/or access point with the help of said parameters.

The method is carried out by a mobile terminal and a communication network which are adapted appropriately.

## Description

### Field of the invention

The invention relates to telecommunications systems, in particular to cellular wireless communication systems. The invention facilitates a mobility management of mobile terminals within homogeneous and heterogeneous networks.

### Background and prior art

Wireless communication systems such as systems according to the GSM/GPRS or UMTS standard but also to the IEEE 802.11 WLAN standard have base stations or access points communicating with mobile terminals by an exchange of signals.

A base station or an access point is a point or node in a wireless or wired communication system that is readily accessible to customers. A base station or an access point typically covers a limited geographical area and particularly serves mobile nodes located within this area to access correspondent nodes by using their wireless communication components.

Base stations and access points are in most cases not synonymous as they offer a different functionality within their networks. However, for sake of simplicity the description will in many cases only refer to access points. For a definition of an access point attention is drawn to J. Manner, M. Kojo: "Mobility Related Terminology", RFC 3753, IETF, June 2004, Informational.). It is evident for the man skilled in the art that when the description refers to access points this will apply to base stations as well.

Furthermore the man skilled in the art knows that different communication standards use a different terminology. This description will often refer to mobile terminals which are PDAs, mobile phones, laptops and the like which are mobile devices which can establish a wireless communication to a network. Other networks use the words mobile station or user equipment (UE) which are synonymous in this respect.

Basically the above-mentioned signals either refer to user data such as voice data of a mobile phone, or are supplementary signals access points and mobile terminals need to exchange in order to offer their services.

As an example, supplementary signals are exchanged when a mobile terminal, such as a user equipment (UE) in a UMTS network, tries to register to the UMTS network via a node B, which is the base station in a UMTS network. After the user equipment is switched on, the following steps are carried out:
1. The signals from the primary synchronisation channel (P-SCH), transmitted from the node B, are evaluated by the UE for carrying out a time slot synchronisation. These signals are equal in all cells and are not scrambled.
2. The signals from the secondary synchronisation channel (S-SCH), transmitted from the node B, are evaluated by the UE for carrying out a time frame synchronisation to this secondary synchronisation channel. This serves to determine the scrambling group number. The UE thus knows that the scrambling code is one out of 8 scrambling codes associated with such a scrambling group.
3. The UE performs a trial and error of the 8 scrambling codes on the common pilot channel. This is done until the proper primary scrambling code is found.
4. The UE receives signals from the primary common control physical channel (P-CCPCH). The P-CCPCH contains the information of the broadcast channel.
5. A decoding and evaluation of these signals is done by the UE to select first a PLMN (Public Land Mobile Network). In the system information on the broadcast channel, the UE can receive the PLMN identity. The particular PLMN to be contacted may be selected either automatically according to a list of PLMNs in priority order, or manually. In the latter case the UE indicates to the user which PLMNs are available. This procedure is specified in 3GPP TS 23.122 V7.0.0 (2005-01) "NAS Functions related to Mobile Station (MS) in idle mode".
6. After a PLMN has been chosen, a cell selection procedure is performed in order to select a suitable cell of that PLMN for registration and for camping on it. The selection of the cell is based on idle mode measurements and cell selection criteria. This procedure is specified in 3GPP TS 25.304 V6.1.0 (2004-03) "User Equipment (UE) procedures in idle mode and procedures for cell reselection in connected mode (Release 6).

In the case of a mobile terminal trying to register to a WLAN cell (in IEEE 802.11 a registration is called an association), the mobile terminal has to synchronise to the cell as well. The synchronisation process depends on the modulation technique which has to be used, for example DSSS (Direct Sequence Spread Spectrum) or OFDM (Orthogonal frequency division multiplexing).

If the evaluation shows that the decoded channel of a UMTS or a WLAN does not belong to the operator network, the user equipment has to start an additional synchronisation to another cell.

In step 4 mentioned above, a UE or a mobile station (mobile terminal in the IEEE standard) has to obtain the broadcast information from a base station or an access point. This broadcast information is required to inform mobile terminals about network IDs, mobility related parameters, link access parameters and other parameters like data for positioning.

Table 1 shows the current broadcast information sent in 3GPP UMTS, IEEE 802.11 WLAN, and IEEE 802.11e WLAN. This information is derived from 3GPP TS 25.133 V6.8.0 (2004-12) "Requirements for Support of Radio Resource Management (FDD) (Release 6)"; 3GPP TS 25.304 V6.1.0 (2004-03) "User Equipment (UE) procedures in idle mode and procedures for cell reselection in connected mode (Release 6)"; 3GPP TS 25.331 V6.2.0 (2004-06) "Radio Resource Control (RRC); Protocol Specification (Release 6)"; ANSI/IEEE Std 802.11, 1999 Edition: "Part 11: Wireless LAN Medium Access Control (MAC) and Physical Layer (PHY) Specifications"; IEEE Std 802.11e/D5.0, July 2003 (Draft Supplement to IEEE Std 802.11, 1999 Edition (Reaff 2003)): "Part 11: Wireless Medium Access Control (MAC) and Physical Layer (PHY) specifications: Medium Access Control (MAC) Enhancements for Quality of Service (QoS)".

Table 2 shows the characteristics of the broadcast channel used in 3GPP UMTS and of the beacon frame used in IEEE 802.11 WLAN. This information has been obtained by the same references as mentioned above for Table 1. The characteristics reveal in which period broadcast information is sent in these systems. Furthermore it provides details about the amount of information (in bytes) which can be sent in one period and it is mentioned that not all broadcast information is sent in each period.

After a mobile terminal has established a registration via a node B in UTMS, it operates either in the idle mode or in the connected mode. In both cases a monitoring of surrounding cells is performed.

In idle mode the UE is camped on a cell. In this case the UE shall regularly search for a better cell according to the cell reselection criteria as defined in 3GPP TS 25.133 V6.8.0 (2004-12) "Requirements for Support of Radio Resource Management (FDD) (Release 6)". If the serving cell does not fulfil the cell re-selection criteria specified in 3GPP TS 25.304 V6.1.0 (2004-03) "User Equipment (UE) procedures in idle mode and procedures for cell reselection in connected mode (Release 6)", the UE shall initiate measurements of all neighbour cells indicated in the measurement control system information. The UE shall be capable of monitoring up to 32 intra-frequency cells, including the serving cell, and 32 inter-frequency cells.

In connected mode the mobile terminal performs a cell reselection (CELL_FACH state, CELL_PCH state, URA_PCH state) by its own or a handover controlled by the network (CELL_FACH state, CELL_DCH state). Depending on the state in connected mode, the mobile terminal performs monitoring of neighbour cells as follows:

CELL_DCH: During the CELL_DCH state the UE shall continuously measure identified intra frequency cells and search for new intra frequency cells in the monitoring set. In case the network requests the UE to report detected set cells, the UE shall also search for intra frequency cells outside the monitored and active set.

CELL_FACH: During the CELL_FACH state the UE shall continuously measure identified intra frequency cells and search for new intra frequency cells in the monitoring set. If a measurement occasion is activated, intra frequency measurements can be performed between the measurement occasions.

CELL_PCH, URA_PCH: The UE shall evaluate the cell re-selection criteria specified in 3GPP TS 25.304, based on radio measurements, and if a better cell is found that cell is selected. Requirements for cell re-selection in CELL_PCH and URA_PCH are the same as for cell re-selection in idle mode.

In connected mode periodic scans are done in intervals within the range of a few hundred milliseconds. Limitations for these periodic scans are required to reduce the power consumption of a mobile terminal. Furthermore, the periodic monitoring of surrounding cells should be done as fast as possible to avoid degradation to ongoing services as interruption times of the service are critical. The periodic monitoring is done in order to avoid a loss of the connection and to allow for accurately timed handover procedures. The number of neighbour cells that can be monitored has to be strongly restricted and depends on the mobile node capabilities. According to 3GPP TS 25.133 the UE shall be able to monitor up to 32 intra frequency FDD cells, including active set, and 32 inter frequency cells.

Especially in connected mode and CELL_DCH state and with an ongoing real-time service, which requires timely and period send data, synchronisation and measurement procedures should not affect the service in a negative way, for example by means of a loss of data, delayed data etc. Therefore, the time required to perform the synchronisation to a cell limits the number of cells that may be monitored and the frequency of monitoring repetitions. This time comprises the time for reading out the broadcast information, which is determined by the maximum waiting time for the next beacon or broadcast frame. Furthermore, this time comprises the time to do the measurements on the down link channel, and for example averaging for filtering of rapid fluctuations.

As can be derived from the above explanations, a lot of supplementary signals with broadcast information are transmitted from the access points to the mobile terminals. It is likely that this signalling (reporting of network IDs, mobility related parameters, further link access parameters) will even increase in the future as there will be more access points in the neighbourhood to the serving cell. These supplementary signals exhibit disadvantages, which affect communications systems in the following ways:

In UMTS systems, the more information is sent via the broadcast channel, the more interference effects will emerge, which increase the power noise level in comparison to the power level of the user data. Furthermore, not all broadcast information might be sent in each radio frame of the broadcast channel. Then, some of the broadcast information has to be sent only every second, third, fourth, radio frame. If the broadcast information of neighbour cells is distributed across several radio frames, the UE requires a longer time to get the parameters for synchronisation to a neighbour cell.

In WLAN systems, the more information is sent within the beacon, the fewer user data can be sent between two beacons because the beacon share the same radio channel as the user data in IEEE 802.11. If the whole broadcast information is too large, this information has to be distributed across several beacons. In this case the mobile terminal requires a longer time to read out the broadcast information, which is needed to evaluate the cell load and the cell capabilities.

### Summary of the invention

It is an object of the present invention to achieve less signalling from the communication network to the mobile terminal, in particular during periods of high user data traffic.

This object and other objects are solved by the features of the independent claims. Further embodiments of the invention are described by the features of the dependent claims. It should be emphasized that any reference signs in the claims shall not be construed as limiting the scope of the invention.

According to the invention the above-mentioned objects are achieved when, in a first step, the geographical location of the mobile terminal is determined. In a second step this location is compared to the known locations of base stations and/or access points to identify at least one such base station or access point with which a synchronisation and/or a connection could be established. In a third step the mobile terminal establishes a synchronisation (for listening to broadcast information and measuring of downlink traffic) and/or establishes a connection for signalling to at least one of the identified base stations and/or access points. This is done with technical parameters of the base stations and/or access points which are known to the mobile terminal prior to establishing the synchronisation or connection.

Performing the first step can be done by known location identification means such as GPS (global positioning system). It is however preferable to use the future European global positioning system which is currently called Galileo, as this system will offer a higher resolution. As a result, the mobile terminal knows its geographical location or position which can be expressed as a longitude and a latitude.

The second step assumes that the geographical positions of base stations and/or access points are known to the mobile terminal. This can be assured when this information is contained in a database which is stored in a storage memory, in particular a non-volatile memory, of the mobile terminal. The access points may all belong to a single telecommunications network, or may belong to different networks.

In most cases it will be sufficient to choose the access points for monitoring which are closest to the current position of the mobile terminal. Other possibilities would be choosing cells with the highest preference value in the database, choosing cells concerning the operating phase (power on, idle mode, connected mode), choosing cells (small cells, large cells) depending on mobile terminal speed, choosing cells depending on the requested or ongoing service, or choosing cells depending on cost per bit or second etc.

In the third step the mobile terminal establishes a synchronisation for listening to broadcast information and measuring of downlink traffic, or establishes a connection to the identified access point. This is done by using parameters associated with this access point which are stored in the above-mentioned database, and are thus known to the mobile terminal prior to synchronisation to the cell or establishing a connection to the cell. In the case of transmit diversity a synchronisation or connection to more than one access point or base station is established.

Summarizing the second and the third step, the mobile terminal has a storage memory which comprises information:
a) on the geographical positions of base stations and/or access points, and
b) on parameters associated with these base stations and/or access points, the parameters being usable by a mobile terminal for establishing a synchronisation or a connection to these base stations and access points.

Unless otherwise indicated, the data associated with this information will be called "data" in the description which follows.

The proper choice of the data, and their number, mainly depends on the size of the storage memory. The data are stored in the storage memory and are thus immediately available for the mobile terminal. They needn't be transferred from the base station to the mobile terminal when they are needed. As a consequence signalling is reduced as desired, in particular in periods of high data traffic.

The database with the data of access points will be called access point map in the following.

Generally, the invention allows for storing time independent parameters, for example the frequency range in which an access point operates. Tabular 3 shows such primary time independent data for UMTS and WLAN systems. Using an access point map, it is not necessary to add a neighbourhood list to the broadcast channel or to the beacon of an access point because the mobile terminal can find surroundings cells by itself using GPS and its access point map.

Without using the present invention all this information has to be contained in the broadcast channel or in the beacon in each cell, for the cell itself and for neighbour cells, of the same or of different radio access technologies, in a neighbour information list. This means that the signalling of the broadcast channel or beacon will increase a lot.

Furthermore, time dependent data of access points may be included as secondary data in the access point map, which vary e.g. in a time frame of one hour or more. Tabular 4 shows such data for UMTS and WLAN systems.

Some information must stay in the broadcast information of the mobile network, even if an access point map is used. Examples are the actual transmit power, the actual load information, or test patterns.

Another advantage of the present invention is that the mobile terminal manages to synchronise or to connect to an access point more quickly and with a reduced power consumption:

During the power on operating phase the use of the access point map can speed up the registration to the PLMN, because the mobile terminal can immediately synchronise to surrounding cells of the PLMN after its position has been determined using the GPS receiver and a computer program for position determination. Synchronisation to cells which do not belong to the PLMN can be avoided. That is very important in cases in which the frequency domain is not exclusively reserved for only one operator. The avoidance of synchronisation to cells, which are not administrated by the operator reduces the power consumption during the registration procedure.

In the idle mode, the use of the access point map can speed up the monitoring process of neighbour cells and therefore the whole cell reselection process. Furthermore, the use of the database results in a reduced power consumption during the cell reselection procedure.

In the connected mode the use of the access point map can speed up the periodic monitoring process and therefore the whole handover candidate cell selection process. Furthermore, the more information is held in the access point map together with time varying broadcasted information, the more reasonable is the selection of the mobile terminal for cells to monitor. A faster and more precise handover candidate cell selection process can enable a seamless or lossless handover procedure. A speed up of the handover candidate cell selection process and the selection of the right handover candidate cells can further reduce the power consumption.

The access points, for which their locations and parameters are stored in the storage memory of the mobile terminal, may be associated with different standards for communications systems, and may particularly refer to UMTS systems, WIMAX systems, and WLAN systems. As a matter of fact, data of other standards or standard expansions may be included in the database as well.

Preferably, the above-mentioned data are downloadable to the mobile terminal. In this way the mobile terminal only needs a limited storage memory, and can download missing data. Typically a network operator will have the above-mentioned data available for a large geographical area such as a whole country or even a continent. An automatic download, which starts if the mobile terminal comes close to the boundary of a predefined geographical region makes it possible to restrict the data to said predefined geographical region. This means that the data of the access point map refer to base stations and access points in a region of predetermined spatial extension, whereby the mobile terminal is located within said region.

As mobile terminals such as mobile phones change their location, the method according to the invention is preferably supplemented by an update service for the data as mentioned above. The data are preferably updated in times of low traffic.

An hourly, daily or weekly update may be sent to all mobile terminals in a specific geographical region. This method according to the invention even allows for reducing broadcasted information concerning time dependent parameters which vary in the range of hours or more. Examples are new base stations and access points, which have been started up in this region, or old base stations and access points which have been shut down forever. Furthermore, information about existing base stations and access points can be updated, which will be switched off for a specific time period for maintenance work. The hourly, daily or weekly update can be sent in time periods having a low traffic load.

These and other aspects of the invention will be apparent from and elucidated with reference to the embodiments described thereafter. It should be noted that the use of reference signs shall not be construed as limiting the scope of the invention.

### Brief description of the tables and drawings:

- Table 1:: lists broadcast information in 3PGG UMTS, IEEE 802.11, and IEEE 802.11e,
- Table 2:: shows characteristics of the broadcast channel in 3GPP UMTS and the beacon in IEEE 802.11,
- Table 3:: shows examples for primary data of the access point map used in UMTS and WLAN systems and also in combined heterogeneous mobile radio networks,
- Table 4:: shows examples for secondary and time varying data of the access point map used in UMTS and WLAN systems and also in combined heterogeneous mobile radio networks,

- Fig. 1: shows a communication network,
- Fig. 2: shows the coverage area of the database,
- Fig. 3: shows a mobile terminal.

### Detailed description of the drawings and of the preferred embodiments

Table 1 lists broadcast information in 3PGG UMTS, IEEE 802.11, and IEEE 802.11e.

Table 2 shows characteristics of the broadcast channel in 3GPP UMTS and the beacon in IEEE 802.11. The characteristics of this table reveal in which period broadcast information is sent in these systems. Furthermore it provides details about the amount of information (in bytes) which can be sent in one period and it is mentioned that not all broadcast information is sent in each period.

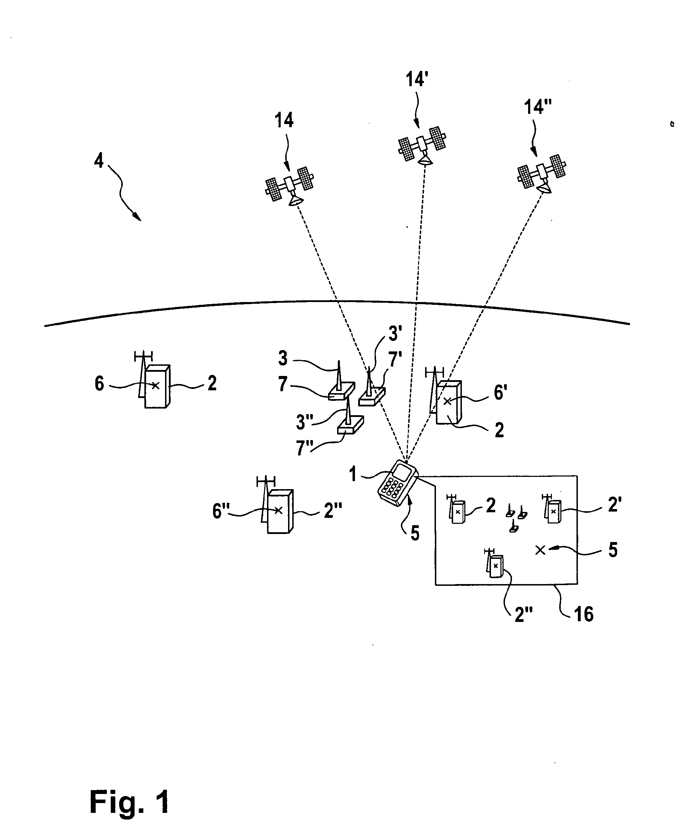

Fig. 1 shows a communication network 4 with base stations 2, 2' and 2" and with access points 3, 3' and 3". Mobile terminal 1 has a GPS system (not shown) to identify its current position 5 with the help of satellites 14, 14' and 14". Mobile station 1 has a database with the position 6, 6', 6" of base stations 2, 2', 2" and the positions 7, 7', 7" of access points 3, 3', 3" within a predefined geographical region as indicated by the insert 16. Only adjacent base stations and access points are shown in Fig. 1. This database represents an access point map.

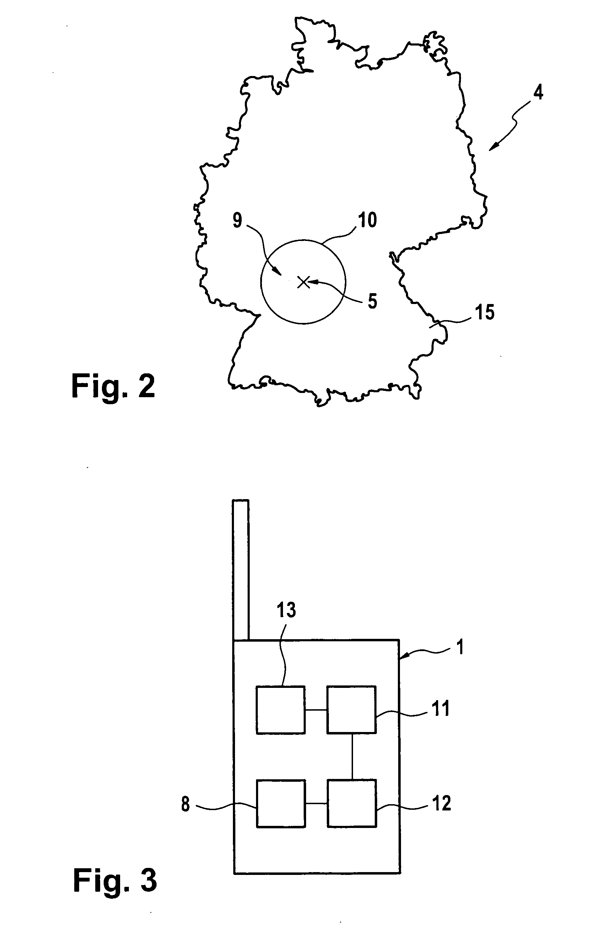

Fig. 2 shows a mobile station at location 5 in the coverage area of a network 4, namely the country 15. The database of the mobile terminal (not shown) contains information on base stations and access points within a region 9. Region 9 is a circle with a radius of 100 km. When the mobile terminal reaches the boundary 10 of the region 9 the database is updated.

Fig. 3 shows a mobile terminal 1 according to the invention. It can use conventions update means 13, for example a computer program requesting an update from the network (not shown) when the boundary 10 of region 9 (not shown), for which data is available, is reached. Data is stored in a conventional non-volatile storage memory 11 whereby administration means, namely a second computer program, uses the information for synchronisation or connecting to an access point.

Table 3 shows primary data of an example database. The data is arranged in column and rows, whereby a column contains the information for one access point. Rows P₁ and P2 contain the latitude and the longitude of the access point respectively. Row P₃ denotes the PLMN ID. Row P4 indicates telecommunication standard such as UMTS or WLAN. Further rows contain the range of coverage, the main radiation direction, preferences values for power on, idle mode, connected mode etc.

Table 4 shows secondarily data of an example database. This data varies within time and has to be updated regularly independent from the movement of the mobile terminal The data is arranged in columns and rows, whereby a column contains the information for one access point. Row S1 contains all known down times of this access point due to maintenance periods. Row S2 denotes all known time periods with reduced capabilities due to maintenance work. Row S3 indicates time periods of high traffic load. Row S4 contains 24 values which represent the averaged traffic load in percentage of the maximum possible traffic load for each hour of a (working) day

### List of reference numerals

- 01: mobile terminal
- 02: base station
- 02': base station
- 02": base station
- 03: access point
- 03': access point
- 03": access point
- 04: communication network
- 05: location of the mobile terminal
- 06: position of the base station 12
- 06': position of the base station 12'
- 06": position of the base station 12"
- 07: position of the access point 2
- 07': position of the access point 2'
- 07": position of the access point 2"
- 08: location identification means
- 09: region
- 10: boundary of a region
- 11: storage memory
- 12: administration means
- 13: download means
- 14: satellite
- 14': satellite
- 14": satellite
- 15: country
- 16: insert

**Table 1**

| **3GPP UMTS** | **IEEE 802.11** |
|---|---|
| Scrambling code | Timestamp |
| PLMN type | Beacon interval |
| PLMN id | Capability info (ESS or IBSS, Point coordinator for delivery and polling, WEP encryption) |
| PLMN id of intra-/ inter-frequency and inter-RAT neighbor cells | ESS id or IBSS id |
| URA id | Supported rates |
| Cell id | Start of contention-free period |
| RAT list | Traffic indication map |
| RAT id | Number of stations associated with BSS (802.11e extension) |
| Maximum allowed UL TX power | Percentage of channel busy time of AP (802.11e extension) |
| UE timers and constants | Available bandwidth capability (802.11 e extension) |
| PhyCH data and config | Admission to and contention of access categories (QoS classes) (802.11e extension) |
| RB config (RB id, PDCP and RLC info, RLC segmentation, in-sequence delivery, polling info, ...) | Advertisement of optional QoS capabilities (802.11 e extension) |
| TrCH config | |
| Data for positioning | |

**Table 2**

| **3GPP UMTS** | **IEEE 802.11** |
|---|---|
| broadcast channel: P- CCPCH (physical channel) | no broadcast channel: broadcast information is transmitted on same physical channel as used for data transmission |
| data rate: 27 kBit/s | lowest modulation rate to enable reception by all mobile terminals at all positions: 1 MBit/s |
| radio frame duration: 10 ms | beacon duration: 1.2 ms |
| max. information: 34 Byte | beacon size: ~150 Byte |
| interval of radio frame: 10 ms | beacon period: typ. 100 ms, max. 1000 ms |
| not all broadcast information is contained in each interval | not all broadcast information is contained in each interval |

**Table 3**

| | | | | | | |
|---|---|---|---|---|---|---|
| P1 | latitude | 48°46'36" | | | | |
| P2 | longitude | 9°10'48" | | | | |
| P3 | PLMN id | | | | | |
| P4 | PLMN subtype/RAT id | UMTS | UMTS | WLAN | WIMAX | ... |
| P5 | range of coverage [m] | 500 | 500 | 50 | 10000 | |
| P6 | main radiation direction | SE 1 /2 E | N 1 /2 E | SWzW | WzS | |
| P7 | preference values for power on, idle mode, and connected mode | 1,1,2 | 1,1,2 | 3,3,2 | 2,1,2 | |
| P8 | Cell id | | | | | |
| P9 | URA id | | | | | |
| P10 | Access Router id | | | | | |
| P11 | Mobility Anchor Point (MAP) id | | | | | |
| P 12 | Router Advertisement Parameters with MAP option | | | | | |
| P 13 | operator chosen policy | | | | | |
| P14 | modulation technique | CDMA/FDD | CDMA/FDD | OFDM | | |
| P15 | frequency range code | 1 | 1 | 3 | 4 | |
| P 16 | scrambling code | | | | | |
| P 17 | Maximum allowed UL TX power | | | | | |
| P18 | antenna configurations | | | | | |
| P19 | UE timers and constants | | | | | |
| P20 | QoS options | | | | | |
| P21 | QoS policy | | | | | |
| P22 | cost per bit or second | | | | | |
| P23 | supported transfer rates [MBit/s] | | | 1,2,5.5,11 | | |
| P24 | ESS id or IBSS id | | | | | |
| P25 | length of beacon interval [ms] | | | 100 | | |
| P26 | medium access rules | | | | | |
| P27 | security level | | | | | |
| P28 | supported handover functionality | | | | | |
| P29 | preferred selection of neighbour cells to monitor for cell reselection or handover | | | | | |
| P30 | further capability information | | | | | |

**Table 4**

| | | | | | | |
|---|---|---|---|---|---|---|
| P1 | latitude | 48°46'36" | | | | |
| P2 | longitude | 9°10'48" | | | | |
| | | | | | | |
| S1 | down times due to maintenance periods | | | 2 to 3 pm | | |
| S2 | reduced capabilities due to maintenance periods | | 2 to 4 am | | | |
| S3 | time periods of high traffic load | 1 to 3 pm, 6 to 9 pm | | | | |
| S4 | averaged traffic load in percentage of maximum traffic load feasible for this cell (splitted in hours for a (working) day) | 10,0,0,0,0,0 ,20,30,50,7 0,80,60,70, 90,60,50,40 ,60,80,80,9 0,70,40,20 | | | | |

## Claims

1. Method for establishing a synchronisation or for establishing a connection between a mobile terminal (1) and a base station (2) and/or an access point (3) in a wireless communication system (4), whereby the mobile terminal carries out the following steps:
a) measuring the location (5) of the mobile terminal,
b) identifying a base station and/or an access point by comparing said location with data stored in the mobile terminal, said data comprising information on
b1) the positions (6, 7) of the base stations and/or access points, and
b2) parameters associated with these base stations and/or access points, the parameters being usable by a mobile terminal for establishing a synchronisation and/or for establishing a connection to at least one of these base stations and/or access points,
c) establishing a synchronisation or establishing a connection to the identified base station and/or access point with the help of said parameters.

2. Method according to claim 1,
**characterized in that**
the mobile terminal uses a location identification means (8) to measure its current location.

3. Method according to claim 1,
**characterized in that**
the base stations and/or access points are associated with different standards for communications systems, and particularly refer to UMTS systems, WIMAX systems, or WLAN systems.

4. Method according to claim 1,
**characterized in that**
the data is downloaded from the network.

5. Method according to claim 1,
**characterized in that**
the data refers to base stations and/or access points in a region (9) of predetermined spatial extension, and that the mobile terminal is located within said region.

6. Method according to claim 5,
**characterized in that**
the data is updated via the network when the mobile terminal comes close to the boundary (10) of the region.

7. Mobile terminal (1) with location identification means (8), with a storage memory (11 ) for storing data, and with means (12) for administrating the memory,
**characterized in that**
the administration means is adapted
a) to receive the location (5) of the mobile terminal from the location identification means,
b) to identify a base station (2) and/or an access point (3) by comparing the location with the data stored in the storage memory, said data comprising information on
b1) the positions (6, 7) of base stations and/or access points, and
b2) parameters associated with these base stations and/or access points, the parameters being usable by a mobile terminal for establishing a synchronisation or for establishing a connection to at least one of these base stations and/or access points.

8. Mobile terminal according to claim 7,
**characterized in that**
the location identification means is a GPS system.

9. Mobile terminal according to claim 7,
**characterized in that**
the administration means is adapted to download the data from a communication network (3).

10. Mobile terminal according to claim 9,
**characterized in that**
the administration means is adapted to initiate an update when the mobile terminal comes close to the boundary (10) of the region (9) for which the data provide the positions of base stations and/or access points.

11. Mobile terminal according to claim 7,
**characterized in that**
the base stations and/or access points are associated with different standards for communications systems, and particularly refer to UMTS systems, WIMAX systems, or WLAN systems.

12. Communication system, comprising a storage memory (11) for storing data,
**characterized in that**
said data comprise information on
a) the positions (6, 7) of base stations (2) and/or access points (3), and
b) parameters associated with these base stations and/or access points, the parameters being usable by a mobile terminal (1) for establishing a synchronisation or for establishing a connection to at least one of these base stations and/or access points.

13. Communication system according to claim 12,
**characterized in that**
the base stations and/or access points are associated with different standards for communications systems, and particularly refer to UMTS systems, WIMAX systems, or WLAN systems.

14. Communication system according to claim 12,
**characterized in that**
it has means (13) for downloading said data to a mobile terminal.

15. A computer program product comprising a computer readable medium, having thereon computer program code means which, when said program is loaded, make a computer execute the method according to any of the claims 1 to 6.
